(19) Europäisches Patentamt
European Patent Office
Office européen des brevets

(11) Publication number: **0 379 942**
**A2**

(12) # EUROPEAN PATENT APPLICATION

(21) Application number: **90100862.3**

(22) Date of filing: **17.01.90**

(51) Int. Cl.5: **C08F 8/30, C08F 297/00, G03F 7/038**

(30) Priority: **23.01.89 US 299203**

(43) Date of publication of application: **01.08.90 Bulletin 90/31**

(84) Designated Contracting States: **AT BE CH DE ES FR GB GR IT LI LU NL SE**

(71) Applicant: **THE DOW CHEMICAL COMPANY**
**2030 Dow Center Abbott Road P.O. Box 1967**
**Midland Michigan 48640-1967(US)**

(72) Inventor: **White, Jerry E.**
**404 Heathermoor**
**Midland, Michigan 48640(US)**
Inventor: **Riess, Gerard**
**31 Meunier**
**F-68200 Mulhouse 68200(FR)**
Inventor: **Tung, Lu Ho**
**19 Kingwood**
**Oakland, California 94619(US)**

(74) Representative: **Sternagel, Hans-Günther, Dr. et al**
**Patentanwälte Dr. Michael Hann Dr. H.-G. Sternagel Sander Aue 30**
**D-5060 Bergisch Gladbach 2(DE)**

(54) **Photocrosslinkable polymers and process for preparing the same.**

(57) The present invention relates to novel polymers prepared by anionic or group transfer techniques and capped with a terminating functionality which is a 3,4-disubstituted maleimido organo compound remnant. These polymers can be easily fabricated in the manner of fabricating thermoplastic elastomers and, upon crosslinking, result in products having properties of vulcanized rubbers. These polymers can also be blended with tackifiers and employed as adhesives that are photosensitive.

EP 0 379 942 A2

## PHOTOCROSSLINKABLE POLYMERS AND PROCESS FOR PREPARING THE SAME

The present invention relates to novel polymers containing functional groups that are photocrosslinkable. More particularly the present invention relates to such polymers that may be easily fabricated in the manner of thermoplastic elastomers and upon photocrosslinking result in products having properties of vulcanized elastomers. Such polymers may be blended with tackifiers and employed as adhesives that are photosensitive. In addition the present invented compositions may be employed to prepare photo printing mats wherein selected exposure to light results in crosslinking of the composition thereby imparting solvent resistance whereas unexposed and uncrosslinked portions thereof lacking in solvent resistance may be later removed during the developing process thereby achieving a flexible surface suitable for printing.

In USP 4,677,047 there is disclosed a composition of matter which crosslinks under the action of light comprising an aliphatically unsaturated polymerization product which is free of aromatic groups and a bisimide. In USP 3,622,321 there is disclosed photographic elements comprising a support having a coating comprising a polymer of styrene and a 3,4-disubstituted bismaleimide.

According to the present invention there is now provided a polymer comprising in polymerized form one or more monomers selected from conjugated dienes, alkyl acrylates, alkyl methacrylates, and monovinylidene aromatic monomers having up to 20 carbons and a terminating functionality, Z, corresponding to the formula:

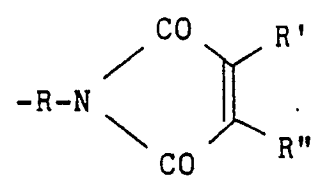

wherein R is an organodiyl radical of up to 24 carbons and $R'$ and $R''$ independently in each occurrence are alkyl, aryl or alkaryl groups of up to 12 carbons, or together $R'$ and $R''$ form a $C_{3-12}$ alkylene or aryl substituted alkylene group.

In a further embodiment of the present invention there is also provided a process for preparing the above polymers comprising contacting one or more polymerizable monomers selected from conjugated dienes, alkyl acrylates, alkyl methacrylates, and monovinylidene aromatic compounds having up to 20 carbons under anionic or group transfer polymerization conditions so as to prepare a living polymer anion and thereafter terminating the anion by contacting with a 3,4-substituted maleimido organo compound corresponding to the formula

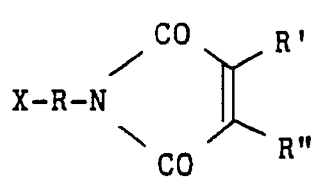

(I)

wherein X is an inert leaving group and R, $R'$ and $R''$ are as previously defined.

A further embodiment of the present invention comprises an adhesive comprising as one component thereof a photocrosslinkable, elastomeric block copolymer of a diene and a monovinylidene aromatic monomer and a terminating functionality, Z, corresponding to the formula:

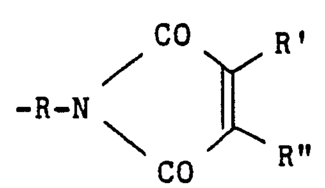

wherein R is an organodiyl radical of up to 24 carbons and $R'$ and $R''$ independently in each occurrence are

alkyl, aryl or alkaryl groups of up to 12 carbons, or together R′ and R″ form a $C_{3-12}$ alkylene or aryl substituted alkylene group.

A final embodiment of the present invention is a flexographic printing plate comprising a photocrosslinkable, elastomeric block copolymer of a diene and a monovinylidene aromatic monomer and a terminating functionality, z, corresponding to the formula:
wherein R is an organodiyl radical of up to 24 carbons and R′ and R″ independently in each occurrence are

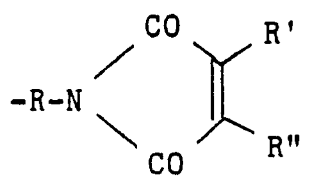

alkyl, aryl or alkaryl groups of up to 12 carbons, or together R′ and R″ form a $C_{3-12}$ alkylene or aryl substituted alkylene group.

It is previously known in the art to prepare polymers and in particular block copolymers of monovinylidene aromatic monomers, conjugated diene monomers, alkyl acrylates and methacrylates and combinations thereof via anionic or group transfer polymerization techniques. Highly useful polymers are prepared in the form of such block copolymers containing one or more blocks of a monovinylidene aromatic polymer and one or more blocks of an alkadiene polymer. Suitably such polymers are prepared in an organic solvent by the use of a suitable initiator, typically an alkali metal organyl compound, particularly sodium or lithium alkyls or group transfer initiators.

Highly desirable polymers are prepared using multifunctional anionic initiators, particularly difunctional anionic initiators, such as 1,3-phenylene-bis(3-methyl-1-phenylpentylidene)-bis(lithium) as disclosed in USP 4,196,154. Utilizing such difunctional initiators, the resulting product is a multiblock copolymer having a symmetrical geometry emanating from the central initial block containing the remnant of the difunctional initiator. Typically, the living polymer anion that remains after addition of all monomers is terminated by contacting with a proton donating composition, suitably an organic alcohol or acid. Additional teachings regarding the use of such difunctional lithium containing initiators are contained in U.S. Patents 3,660,536; 3,776,893; 3,954,894; 4,172,190; 4,200,718; 4,205,016; 4,431,777; 4,427,837; and 4,614,768.

The coupling of living polymer anions by the use of multifunctional vinyl compounds, such as divinyl benzene, is previously well known in the art. The resulting coupled product retains living anion functionality and may be terminated by use of the present 3,4-disubstituted maleimido organo compounds.

Techniques for the preparation of block copolymers of alkyl acrylates and methacrylates have recently been disclosed in the teachings of James E. McGrath et al., Polymer Preprints, Vol. 28, No. 2, August (1987) p. 214-216 and in copending U.S. Serial No. 172,040 filed March 23, 1988 and U.S. Serial No. 70,629 filed July 6, 1987.

Group transfer polymerizations are previously disclosed in J. Am. Chem. Soc., 105, 5706 (1983), Macromol., 17, 1415 (1984), USP's 4,581,428; 4,414,372; 4,417,034; 4,791,181. The method is a living polymerization process particularly suited for the preparation of polymers of acrylic monomers.

Utilizing the foregoing techniques the polymers resulting from the present invention may have the following formulas: ZA, ZB, ZC, ZAZ, ZBZ, ZCZ, ZABAZ, ZBABABZ, ZABABABAZ, ZCABACZ, ZCBABCZ and ZCABABABACZ, depending on the order of addition of monomers wherein A is a block of one or more monovinylidene aromatic monomers, B is a block of one or more conjugated diene monomers, C is a block of one or more alkyl acrylates or methacrylates, and Z is the terminating functionality as previously defined. Most highly preferred polymers according to the present invention are elastomeric block copolymers prepared by anionic polymerization techniques with difunctional initiators and corresponding to the formula ZBABABZ or ZABABABAZ wherein A, B and Z have the previously defined meanings.

Preferred monovinylidene aromatic monomers include styrene, $C_{1-4}$ ring alkylated styrenes, α-methylstyrene, and 1,1-diphenylethene. Preferred conjugated diene monomers are butadiene and isoprene. Preferred alkyl acrylates or methacrylates are $C_{1-18}$ alkyl acrylates and methacrylates and most preferably $C_{1-10}$ alkyl methacrylates.

Preferred 3,4-substituted maleimido organo compounds for use according to the present invention include compositions according to the foregoing formula (I) wherein X is halo, especially chloro, and R is alkylene, arylene, a divalent derivative of an ether, thioether or polyether or a carbonyl containing derivative of any of the foregoing. More particularly, R includes: $-(CHR')_n-$, -Ph-, $(CHR')_nPh-$, $-(CH_2CHR'Y)_n-$, $-C(O)-(CHR')_n-$, or -C(O)Ph- wherein Ph is phenyl, R′ is hydrogen or $C_{1-4}$ alkyl, Y is oxygen or sulfur, and n is a

number greater than or equal to one indicating the average number of repeating units in the compound.

For use in elastomeric and adhesive applications, it is highly desirable that the polymer be in the form of a block copolymer of the formula, ZABAZ, and contain, prior to incorporation of the maleimido terminating agent, from 5 percent to 30 percent monovinylidene aromatic monomer and the remainder conjugated diene monomer.

The polymers of the present invention are prepared utilizing previously known techniques in the art, except that the 3,4-substituted maleimido organo compound is employed as a terminating agent. Suitable solvents for anionic polymerization include inert aliphatic or aromatic liquid hydrocarbons and derivatives thereof, such as tetrahydrofuran including mixtures thereof. Extremely narrow molecular weight distribution anionic polymers are obtainable by the use of coinitiators including the lower alkoxides of lithium and aliphatic diamines or triamines having up to about carbons. Such coinitiators are particularly well suited for use in combination with the above difunctional anionic initiators based on 1,3-phenylene-bis(3-methyl-1-phenylpentylidene) and are employed in an amount based on equivalents of the above initiator of from 10 to 200 percent.

Having described the invention the following examples are provided as further illustrative and are not to be construed as limiting. Parts and percentages, where provided, are measured on a weight basis.

Example 1

Anionic polymerization was conducted in a 2 liter reactor that was purged with nitrogen. Purified toluene, 1400 ml, purified isoprene, 259 ml, purified styrene, 34.2 ml, and 0.83 ml of an isopropyl alcohol:toluene solution (1:10 by volume) were added.

After mixing, 60 ml of the mixture was withdrawn into a separate flask for analysis of residue impurities. Based on the analysis result, 1.17 milliequivalents of sec-butyllithium in cyclohexane solution was added to the reaction mixture to react with the isopropyl alcohol 5(forming lithium isopropoxide in situ) and any remaining impurities. The reaction mixture was then heated to 50 °C. Just before the temperature reached the desired control temperature, 1.56 millimoles of a difunctional organolithium initiator, 1,3-phenylene-bis(3-methyl-1 -phenylpentylidene)-bis(lithium), was added to initiate the polymerization. After about 35 minutes, the color of the reaction mixture turned to a dark red signaling that the isoprene polymerization was completed and the styrene polymerization had begun. In another 30 minutes 25 ml of purified isoprene was added. The temperature control was raised to 55 °C. After another 30 minutes the reaction mixture was cooled to 25 °C and 20 ml of purified tetrahydrofuran added to assist in the succeeding termination reaction. A solution of 0.93 g of 3-[3,4-dimethyl(maleimido)]propionyl chloride in 10 ml of purified tetrahydrofuran was added and the reaction mixture stirred for 30 minutes. Two grams of di-tert-butyl hydroxy toluene antioxidant was added and the resulting product was recovered by drying in a vacuum oven. The product was a pentablock polymer of the formula ZISISIZ (I is an isoprene block, 5 is a styrene block) having dimethylmaleimido propionyl groups attached to both ends of the chains (Z). In the above nomenclature it is of course assumed that the central isoprene block results from polymerization of isoprene at both ends of the difunctional initiator which remains as a remnant therein.

Melt flow rate for this polymer was determined to be 1.22 g/10 min (ASTM method D1238 schedule G) after 5 minutes of heating at the barrel temperature of 200 °C. After 60 minutes at the barrel temperature the melt flow rate was 1.24 g/10 min showing that there was substantially no thermally reduced crosslinking taking place.

Five grams of this polymer were dissolved in 75 ml of methylene chloride. Films of 1-mil (0.0254 ml) thickness were cast from the solution. The specimen was then irradiated at the focal point of a PortacureTM 1500F (815 °C), 200 w/in$^2$ (31 x $10^4$ W/m$^2$) medium pressure mercury vapor source. Gel fractions were determined after various exposure times by extraction of irradiated samples for 24 hours at 25 °C with methylene chloride. The results are shown in the next table.

| Irradiation time sec. | Gel fraction % |
|---|---|
| 1 | 91.7 |
| 2 | 91.3 |
| 3 | 100.0 |
| 6 | 100.0 |

This result indicates that crosslinking of the elastomeric block copolymer is readily induced by exposure to ultraviolet light.

Example 2

The polymerization process in Example 1 was substantially repeated except that the amount of initiator used was reduced from 1.56 millimole to 1.30 millimole, no secondary addition of isoprene occurred and 5.2 millimoles of 1,1-diphenyl ethylene was added after substantially complete polymerization of styrene had occurred. The block copolymer formed had the configuration, ZSISZ, where I is isoprene and S is a block of styrene with 1,1-diphenyl ethylene terminal functionality and dimethyl(maleimido)propionyl groups attached to both ends of the polymer chains.

Films of this polymer cast from methylene chloride yielded the following photocrosslinking results.

| Irradiation time sec. | Gel fraction % |
|---|---|
| 1 | 40.0 |
| 2 | 48.6 |
| 3 | 61.5 |
| 4 | 66.7 |
| 6 | 67.6 |

As may be seen the product had substantially increased gel content after irradiation thereby indicating radiation induced crosslinking occurred.

Example 3

Example 1 was substantially repeated except that after polymerization of isoprene and styrene blocks, a mixture of 20 ml isoprene and 3 ml of styrene was added. The product was a block copolymer of ZSISISISZ configuration capped at both ends by dimethyl(maleimido)propionyl groups. The results of photocrosslinking a film of this polymer cast from methylene chloride are shown in the next table.

| Irradiation time sec. | Gel fraction % |
|---|---|
| 1 | 73.0 |
| 2 | 81.4 |
| 3 | 81.4 |
| 6 | 90.3 |

Example 4

Anionic polymerization was carried out in a 2 liter partly glass, partly metal reactor. The reactor was purged first with nitrogen. Purified toluene (1400 ml), purified isoprene (259 ml), and purified styrene (34 ml) were added. After mixing, 60 ml of the charge was withdrawn into a separate flask for analysis of residue impurities that remained in the reaction mixture. Based on the analysis result, 0.5 milliequivalents of sec-butyllithium in cyclohexane solution was added to the reaction mixture to react with the remaining impurities. The reaction mixture was then heated to 50 °C. Just before the temperature reached the desired control temperature 1.3 millimoles of a difunctional organolithium initiator, 1,3-phenylene-bis(3-methyl-1--phenylpentylidene)bis(lithium), was added to initiate the polymerization. The polymerization proceeded and

the temperature in the reactor continued to rise to a peak of 75° C at about 30 minutes after the addition of the initiator. Forty minutes after the initiator addition, the color of the reactants turned to a dark red color signaling that the isoprene polymerization was completed and the styrene polymerization had begun. Polymerization was allowed to proceed for another 45 minutes. Then 5.1 milliequivalents of 1,1-diphenylethylene and 10 ml of purified tetrahydrofuran were added. The reaction mixture was stirred for 10 minutes at 50° C and then cooled to 25° C. N-(Chloromethyl)-3,4-dimethylmaleimide 1.3 ml, was then added. The dark red color disappeared almost instantly and the reaction mixture was stirred for another 30 minutes. Two grams of di-tert-butyl hydroxy toluene was added as a stabilizer and the resulting product was recovered by drying in a vacuum over. The product was a tapered triblock polymer of styrene and isoprene with 3,4-dimethylmaleimido methyl group attached to both end of the chains. The polyisoprene center block was 85 percent by weight as calculated from the feed and the polystyrene end blocks were 15 percent by weight. Gel permeation chromatography showed the polymer had a weight average molecular weight of 276,000.

Example 5

If an adhesive composition is prepared from the polymer of Example 1 by addition of a typical terpene tackifier, (RegalrezTM 1094 available from Hercules, Inc.) the resulting composition may be extrusion coated onto a paper tape and exposed to ultraviolet light thereby rendering the resulting adhesive film resistant to solvents normally employed in paint formulations.

Example 6

A thick (1 mm) film of the block copolymer of Example 1 is deposited onto a flat substrate. A mask is placed over the film and the assembly exposed to light. Washing the surface with methylene chloride solvent will remove substantially all of the surface of the film which was not exposed to light leaving a raised surface printing plate suitable for flexographic printing of an image corresponding to the mask.

## Claims

1. A polymer comprising in polymerized form one or more monomers selected from conjugated dienes, alkyl acrylates, alkyl methacrylates, and monovinylidene aromatic monomers having up to 20 carbons and a terminating functionality, Z, corresponding to the formula:

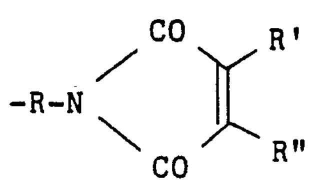

wherein R is an organodiyl radical of up to 24 carbons and R′ and R″ independently each occurrence are alkyl, aryl or alkaryl groups of up to 12 carbons, or together R′ and R″ form a $C_{3-12}$ alkylene or aryl substituted alkylene group.

2. A block copolymer as claimed in Claim 1 wherein the terminating functionality is a dimethylimido propionyl functionality.

3. A block copolymer as claimed in Claim 1 corresponding to the formula ZABAZ or ZBABABZ wherein A comprises a polymeric block of a monovinylidene aromatic monomer and B comprises a polymeric block of a conjugated diene.

4. A block copolymer as claimed in Claim 3 wherein the conjugated diene is butadiene or isoprene and the monovinylidene aromatic monomer is styrene.

5. A process for preparing a polymer comprising in polymerized form one or more monomers selected from the group consisting of conjugated dienes, alkyl acrylates, alkyl methacrylates, and monovinylidene aromatic monomers having up to 20 carbons and a terminating functionality, Z, corresponding to the formula:

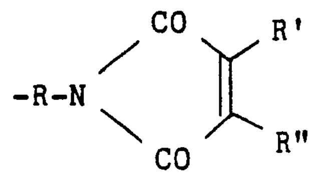

wherein R is an organodiyl radical of up to 24 carbons and R′ and R″ independently each occurrence are alkyl, aryl or alkaryl groups of up to 12 carbons, or together R′ and R″ form a $C_{3-12}$ alkylene or aryl substituted alkylene group,
the steps of the process comprising contacting one or more polymerizable monomers selected from conjugated dienes, alkyl acrylates, alkyl methacrylates, and monovinylidene aromatic compounds having up to 20 carbons under anionic or group transfer polymerization conditions so as to prepare a living polymer anion and thereafter terminating the anion by contacting with a 3,4-substituted maleimido organo compound corresponding to the formula

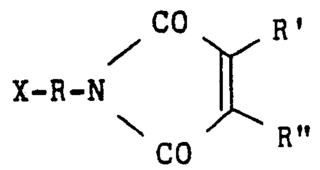

wherein X is an inert leaving group, R is an organodiyl radical of up to 24 carbons and R′ and R″ independently in each occurrence are alkyl, aryl or alkaryl groups of up to 12 carbons, or together R′ and R″ form a $C_{3-12}$ alkylene or aryl substituted alkylene group.

6. A process as claimed in Claim 5 wherein the maleimido organo compound is 3-[3,4-dimethyl-(maleimido)]propionyl chloride.

7. An adhesive comprising as one component thereof a photocrosslinkable, elastomeric block copolymer of a diene and a monovinylidene aromatic monomer and a terminating functionality, Z, corresponding to the formula:

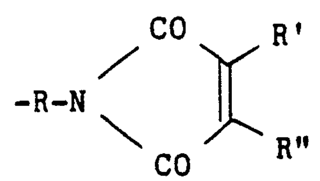

wherein R is an organodiyl radical of up to 24 carbons and R′ and R″ independently in each occurrence are alkyl, aryl or alkaryl groups of up to 12 carbons, or together R′ and R″ form a $C_{3-12}$ alkylene or aryl substituted alkylene group.

8. A flexographic printing plate comprising a photocrosslinkable, elastomeric block copolymer of a diene and a monovinylidene aromatic monomer and a terminating functionality, Z, corresponding to the formula:

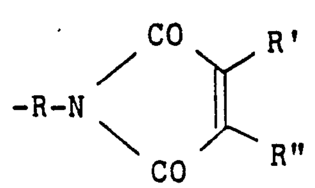

wherein R is an organodiyl radical of up to 24 carbons and R′ and R″ independently in each occurrence are alkyl, aryl or alkaryl groups of up to 12 carbons, or together R′ and R″ form a $C_{3-12}$ alkylene or aryl substituted alkylene group.